# EUROPÄISCHE PATENTSCHRIFT

(11) **EP 3 953 578 B1**
(45) Veröffentlichungstag und Bekanntmachung des Hinweises auf die Patenterteilung: **22.06.2022**
(21) Anmeldenummer: 20713533.6
(22) Anmeldetag: 13.03.2020
(51) Int. Cl.: E02B 9/00, F03B 3/18, F03B 15/18

(54) **WASSERKRAFTANLAGE**
HYDROELECTRIC POWER PLANT
CENTRALE HYDROÉLECTRIQUE

(30) Priorität: 08.04.2019 DE 102019109118; 06.12.2019 DE 102019133291
(43) Veröffentlichungstag der Anmeldung: 16.02.2022
(73) Patentinhaber: Voith Patent GmbH, 89522 Heidenheim (DE)
(72) Erfinder: SCHABASSER, Martin, 3123 Pfaffing (AT)
(74) Vertreter: Voith Patent GmbH - Patentabteilung
(86) Internationale Anmeldenummer: PCT/EP2020/056851
(87) Internationale Veröffentlichungsnummer: WO 2020/207700

(56) Entgegenhaltungen:
- CN-A- 104 564 510
- DE-A1- 3 921 570
- DE-C- 464 551
- GB-A- 322 314
- JP-A- S54 101 033
- US-A- 1 873 955

## Beschreibung

Die Erfindung betrifft eine Wasserkraftanlage mit einer hydraulischen Maschine und einem Servomotor, wobei der Servomotor zum Regulieren der hydraulischen Maschine verwendet wird. Je nach Bauart der hydraulischen Maschine kann der Servomotor beim Regulieren der hydraulischen Maschine dazu verwendet werden, die Leitschaufeln (Francis, Propeller oder Kaplan), die Laufradschaufeln (Kaplan) oder die Düsennadeln bzw. die Strahlablenker (Pelton) zu bewegen. Bei doppelt regulierten hydraulischen Maschinen können dazu wenigstens zwei Servomotoren verwendet werden.

In der Regel werden zur Regulierung von hydraulischen Maschinen von Wasserkraftanlagen ölhydraulische Servomotoren in Form von Hydraulikzylindern verwendet. Im Schadensfall ergibt sich dadurch das Risiko der Verschmutzung des Gewässers durch das Hydrauliköl. Zur Lösung dieses Problems wurden im Stand der Technik elektrisch betriebene Servomotoren zur Regulierung von Wasserkraftanlagen vorgeschlagen.

Die WO 2016/145 541 A1 offenbart beispielsweise eine Wasserkraftanlage mit elektrischen Servomotoren zum Bewegen der Leitschaufeln. Die DE 464551 offenbart eine Wasserkraftanlage mit einem elektrischen Servomotor zum Bewegen der Laufradschaufeln. Eine weitere Wasserkraftanlage ist in CN 104 564 510 A offenbart.

Da die sicherheitsrelevante Funktionalität der Regulierung einer hydraulischen Maschine einer Wasserkraftanlage, wie z.B. die Notschlussfähigkeit, unter allen Umständen gegeben sein muss, ergibt sich bei elektrisch betriebenen Servomotoren das Problem der Gewährleistung der Funktionalität bei einem Stromausfall. In der Regel werden dazu elektrische Energiespeicher und die dazugehörige Ausstattung zur Überwachung und Ladung benötigt.

Die Erfinder haben sich die Aufgabe gestellt, eine Wasserkraftanlage mit einer hydraulischen Maschine und einem Servomotor zur Regulierung anzugeben, der ohne Hydrauliköl betrieben wird und auch bei einem Stromausfall die Sicherheitsfunktionalität gewährleistet.

Die gestellte Aufgabe wird durch eine Wasserkraftanlage mit den Merkmalen des unabhängigen Anspruchs gelöst. Vorteilhafte Ausführungsformen ergeben sich aus den davon abhängigen Unteransprüchen.

Die erfindungsgemäße Lösung wird nachfolgend anhand von Figuren erläutert. Darin ist im Einzelnen folgendes dargestellt:
- Figur 1: Gattungsgemäße Wasserkraftanlage;
- Figur 2: Servomotor zum Regulieren der hydraulischen Maschine einer erfindungsgemäßen Wasserkraftanlage in einer ersten Ausführungsform;
- Figur 3: Servomotor zum Regulieren der hydraulischen Maschine einer erfindungsgemäßen Wasserkraftanlage in einer weiteren Ausführungsform;
- Figur 4: Servomotor zum Regulieren der hydraulischen Maschine einer erfindungsgemäßen Wasserkraftanlage in einer weiteren Ausführungsform.

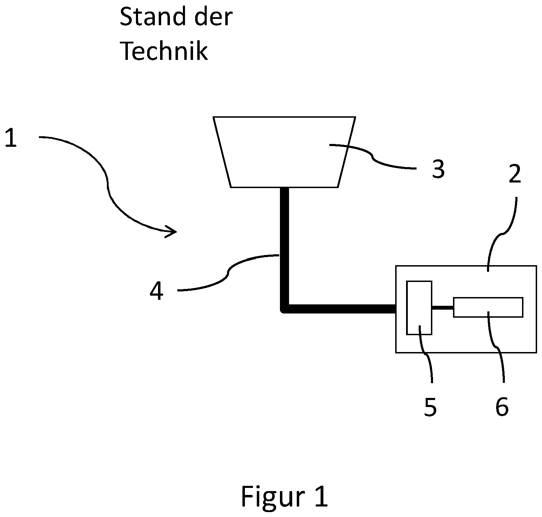

Figur 1 zeigt in sehr schematischer Darstellung eine gattungsgemäße Wasserkraftanlage gemäß dem Stand der Technik. Dabei ist die Wasserkraftanlage mit 1 bezeichnet. Die Wasserkraftanlage 1 umfasst eine hydraulische Maschine, welche mit 2 bezeichnet ist, ein Oberwasserbecken, welches mit 3 bezeichnet ist, und eine Druckrohrleitung, welche mit 4 bezeichnet ist und welche das Oberwasserbecken 3 mit der hydraulischen Maschine 2 verbindet. Beim Oberwasserbecken 3 kann es sich auch um ein natürliches Gewässer, z.B. einen See oder einen Flusslauf, handeln. Bei einer Fließwasserkraftanlage, d.h. bei einem Flusskraftwerk ist die Druckrohrleitung 4 der Einlauf der Wasserkraftanlage. Die hydraulische Maschine 2 umfasst wenigstens ein Regelorgan zum Regulieren der hydraulischen Maschine. Dabei ist das schematisch dargestellte Regelorgan mit 5 bezeichnet. Die hydraulische Maschine 2 umfasst ferner wenigstens einen Servomotor zum Betätigen des Regelorganes 5, welcher mit 6 bezeichnet und mit dem Regelorgan 5 verbunden ist. Durch die Betätigung des Regelorganes 5 reguliert der Servomotor 6 die hydraulische Maschine 2.

Als Regelorgan kommen bei den bekannten Bauarten von hydraulischen Maschinen beispielsweise die Leitschaufeln (Francis, Propeller oder Kaplan), die Laufradschaufeln (Kaplan) oder die Düsennadeln bzw. die Strahlablenker (Pelton) in Frage. Dabei können alle Leitschaufeln mithilfe eines Regelrings gemeinsam oder auch einzelne Leitschaufeln separat von jeweils wenigstens einem Servomotor betätigt werden.

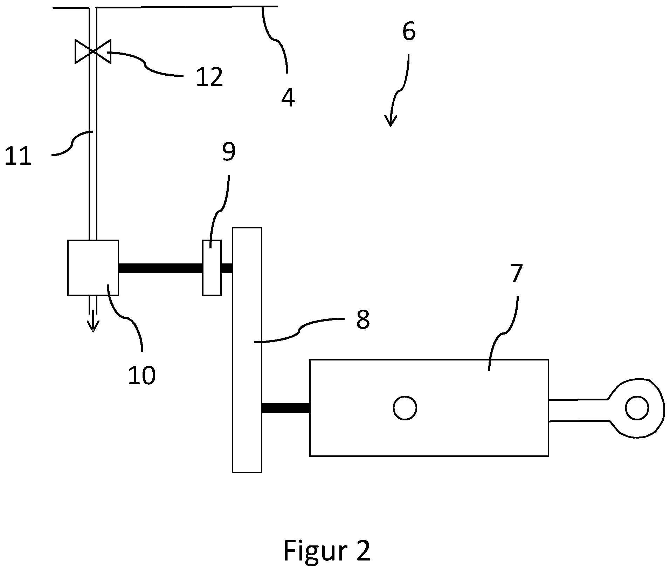

Figur 2 zeigt einen Servomotor zum Regulieren der hydraulischen Maschine einer erfindungsgemäßen Wasserkraftanlage in einer ersten Ausführungsform. Der Servomotor ist mit 6 bezeichnet. Der Servomotor 6 umfasst eine Gewindespindel, welche mit 7 bezeichnet ist. Zum Betätigen des Regelorgans ist die Gewindespindel 7 mit dem Regelorgan verbunden. Figur 2 zeigt weder das Regelorgan noch die Verbindung der Gewindespindel 7 mit demselben. In Figur 2 sind jedoch durch die beiden kleinen Kreise die Angriffspunkte des Servomotors 6 angedeutet. Mit einem der Angriffspunkte wird der Servomotor abgestützt, z.B. am einem Gehäuse oder Fundament, und mit dem anderen Angriffspunkt greift der Servomotor 6 am Regelorgan an. Der Servomotor 6 umfasst ferner ein Getriebe, welches mit der Gewindespindel 7 verbunden und mit 8 bezeichnet ist. Der Servomotor 6 umfasst ferner eine Antriebsmaschine mit einer Antriebswelle, welche mit 10 bezeichnet ist. Dabei ist die Antriebswelle der Antriebsmaschine 10 mit dem Getriebe 8 so verbunden, dass die Antriebsmaschine 10 die Gewindespindel 7 über das Getriebe 8 antreiben kann.

Die Antriebsmaschine 10 ist mit einer Wasserleitung mit der Druckrohrleitung 4 verbunden. Dabei ist die Wasserleitung mit 11 bezeichnet. Dabei sind die Antriebsmaschine 10 und die Wasserleitung 11 so ausgebildet, dass die Antriebsmaschine 10 durch das mittels der Wasserleitung 11 aus der Druckrohrleitung entnommene Wasser angetrieben werden kann. Dabei kann die Antriebsmaschine 10 beispielsweise als hydraulische Strömungsmaschine, z.B. in der Form einer kleinen ungeregelten Francis-Turbine, oder auch als hydraulische Verdrängungsmaschine ausgebildet sein. Kleine ungeregelte Francis-Turbinen sind robust genug, so dass auch bei leichter Verschmutzung des antreibenden Wassers die sicherheitsrelevante Funktionalität des Servomotors 6 gewährleistet werden kann. Zur Regelung des Wasserflusses von der Druckrohrleitung 4 zur Antriebsmaschine 10 ist in der Wasserleitung 11 ein Ventil angeordnet , welches mit 12 bezeichnet ist. Im einfachsten Fall ist das Ventil 12 als steuerbares Absperrventil ausgebildet.

Optional kann auf der Antriebswelle der Antriebsmaschine 10 eine mechanische Bremse angeordnet sein. In Figur 2 ist eine solche mit 9 bezeichnet. Die mechanische Bremse 9 dient zur Drehzahlbegrenzung und ist vorzugsweise als Fliehkraftbremse ausgebildet.

Die Gewindespindel 7 kann beispielsweise als Kugel- oder als Planetengewindespindel ausgeführt sein.

Zum Abdecken der vollständigen Funktionalität beim Regulieren einer Wasserkraftanlage muss das Regelorgan bzw. müssen die Regelorgane der hydraulischen Maschine in beide Richtungen betätigt werden können. Bei einer Francis-Turbine müssen dazu beispielsweise die Leitschaufeln geschlossen und geöffnet werden können. Zur Abdeckung der sicherheitsrelevanten Funktionalität genügt es dagegen in der Regel, wenn nur die Schließen-Richtung bereitgestellt wird. Im Prinzip kann eine Wasserkraftanlage daher mehrere Servomotoren zur Betätigung der Regelorgane umfassen, wobei die Funktionalitäten auf die verschiedenen Servomotoren verteilt werden, indem beispielsweise ein Teil der Servomotoren nur für das Schließen und der andere Teil nur für das Öffnen zuständig ist. Eine andere mögliche Aufteilung besteht darin, dass ein oder mehrere Servomotoren nur für die sicherheitsrelevante Funktionalität vorgesehen sind und daher nur für das Schließen, während andere Servomotoren für den Normalbetrieb ausgelegt sind, und daher sowohl Öffnen als auch Schließen können.

Wenn der Servomotor gemäß Figur 2 nur für das Schließen vorgesehen ist, dann genügt es, wenn die Antriebsmaschine 10 nur eine Drehrichtung ihrer Antriebswelle bereitstellen kann. Wenn der Servomotor hingegen für Schließen und Öffnen vorgesehen ist, dann muss die Antriebsmaschine 10 ihre Antriebswelle in beide Drehrichtungen bewegen können. Im letzten Fall kann die Antriebsmaschine 10 dazu eine Ventilanordnung umfassen, welche so ausgeführt ist, dass sie den Wasserfluss intern entsprechend der gewünschten Drehrichtung einstellen kann. Das lässt sich z.B. bei einer hydraulischen Verdrängungsmaschine leicht umsetzen. Eine Francis-Turbine ist jedoch in der Regel nur für eine Drehrichtung geeignet.

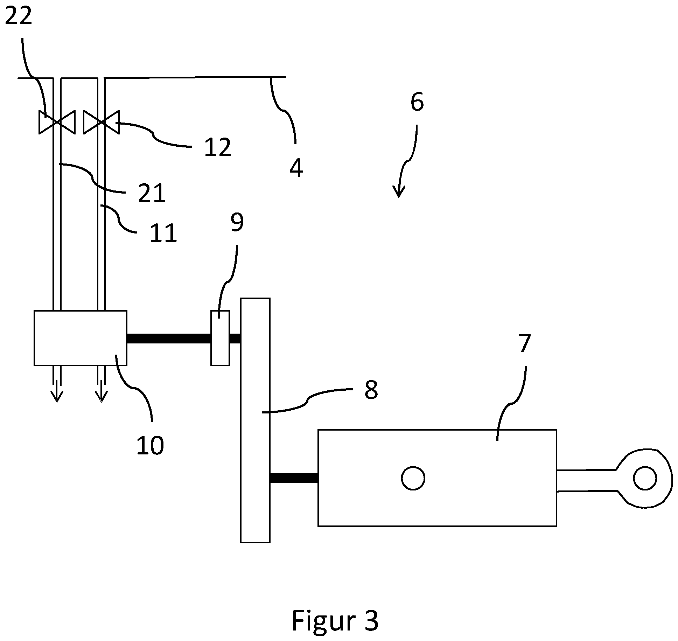

Figur 3 zeigt einen Servomotor zum Regulieren der hydraulischen Antriebsmaschine einer erfindungsgemäßen Wasserkraftanlage in einer weiteren Ausführungsform. Zusätzlich zu den in Figur 2 gezeigten Elementen umfasst der Servomotor 6 in Figur 3 eine zusätzliche Wasserleitung, welche die Antriebsmaschine 10 mit der Druckrohrleitung 4 verbindet und welche mit 21 bezeichnet ist. Zur Regelung des Wasserflusses in der Wasserleitung 21 ist in derselben ein Ventil angeordnet, welches mit 22 bezeichnet ist. Auf diese Weise kann die Wasserleitung 11 dazu verwendet werden, um die Antriebsmaschine 10 in der einen Drehrichtung anzutreiben, und die Wasserleitung 21 kann dazu verwendet werden die Antriebsmaschine 10 in der anderen Drehrichtung anzutreiben. Falls die Antriebsmaschine 10 als hydraulische Verdrängungsmaschine ausgeführt ist, kann auf diese Weise die interne Ventilanordnung einfacher aufgebaut sein. Die Antriebsmaschine 10 kann aber auch zwei hydraulische Maschinen in Tandemanordnung mit umgekehrter Drehrichtung umfassen, so dass in der Ausführungsform gemäß Figur 3 auch Francis-Turbinen zur Bereitstellung von beiden Regelrichtungen (Öffnen und Schließen) zweckmäßig eingesetzt werden können.

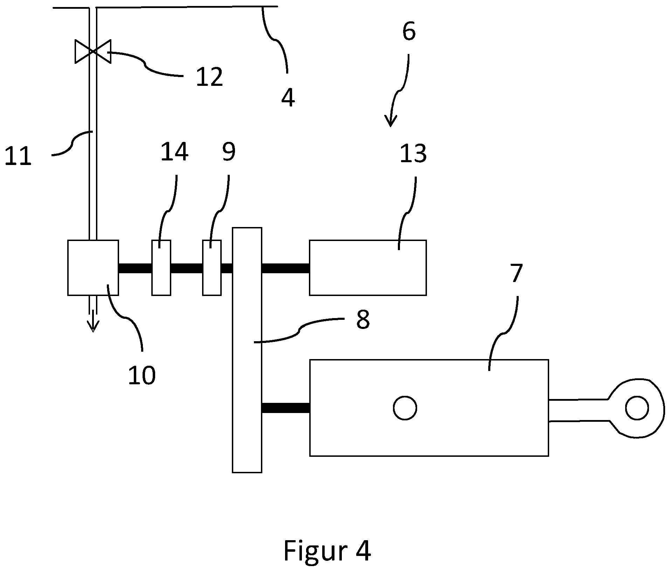

Figur 4 zeigt einen Servomotor zum Regulieren der hydraulischen Maschine einer erfindungsgemäßen Wasserkraftanlage in einer weiteren Ausführungsform. Zusätzlich zu den in Figur 2 gezeigten Elementen umfasst der Servomotor 6 in Figur 4 einen Elektromotor mit einer Antriebswelle, welcher mit 13 bezeichnet ist. Dabei ist die Antriebswelle des Elektromotors 13 so mit dem Getriebe 8 verbunden, dass der Elektromotor 13 die Gewindespindel 7 über das Getriebe 8 antreiben kann. Das bedeutet, dass die Gewindespindel 7 sowohl mit der Antriebsmaschine 10 als auch mit dem Elektromotor 13 angetrieben werden kann. Dazu kann das Getriebe 8 beispielsweise als Summier-Getriebe ausgebildet sein. Genauso gut können die beiden Antriebswellen der Antriebsmaschine 10 und des Elektromotors 13 eine einzige gemeinsame Antriebswelle bilden, indem die beiden Wellen axial miteinander verbunden sind. Die Ausführungsform gemäß Figur 4 kann vorteilhaft benutzt werden, indem der Elektromotor 13 die Gewindespindel 7 im Normalbetrieb in beiden Richtungen antreibt, während die Antriebsmaschine 10 nur für die Schließfunktion im Notfall zum Einsatz kommt.

Es kann notwendig sein, dass im Normalbetrieb eine andere maximale Schließzeit vorzusehen ist als im Notbetrieb. Dazu kann der Servomotor 6 optional wenigstens eine weitere mechanische Bremse umfassen, welche eine Kupplung umfasst, mit der die zusätzliche mechanische Bremse bei Bedarf mit dem Antriebsstrang verbunden werden kann. In Figur 4 ist eine solche zusätzliche mechanische Bremse dargestellt und mit 14 bezeichnet. Die Bremse 14 ist dabei an der Antriebswelle der Antriebsmaschine 10 angeordnet. Sie könnte auch an der Antriebswelle des Elektromotors 13 angeordnet sein. Dasselbe gilt übrigens auch für die mechanische Bremse 9. Die mechanische Bremse 9 wirkt daher permanent drehzahlbegrenzend, während die zusätzliche mechanische Bremse 14 nur bei Bedarf die maximale Drehzahl weiter herabsetzt, z.B. in der Schlussphase des Notschlussvorgangs. Auch die zusätzliche Bremse 14 ist bevorzugt als Fliehkraftbremse ausgeführt. Die zusätzlich kuppelbare Bremse 14 kann auch mit den anderen Ausführungsformen gemäß Figur 2 und 3 kombiniert werden. Es können auch mehrere kuppelbare zusätzliche Bremsen 14 verwendet werden, um noch mehr verschiedene maximale Drehzahlen einstellen zu können. Im Prinzip können auch alle Bremsen des Servomotors 6 kuppelbar ausgeführt sein. Zur Gewährleistung der Betriebssicherheit müssen die Kupplungen sicher betätigt werden, d.h. die sichere Stellung (normalerweise Eingekuppelt) muss durch Federkraft gewährleistet sein.

In Ausführungsformen, welche einen Elektromotor 13 umfassen, kann es von Vorteil sein, wenn die Antriebsmaschine 10 vom Antriebsstrang abgekuppelt werden kann. Da der Servomotor 6 im Normalbetrieb durch den Elektromotor 13 angetrieben wird, kann in diesem Betriebsmodus die Antriebsmaschine 10 vom Antriebsstrang abgekuppelt werden, damit der Elektromotor 13 dieselbe nicht andauern mitbewegen muss.

In Ausführungsformen, welche einen Elektromotor 13 umfassen, kann die Betriebssicherheit natürlich dadurch weiter erhöht werden, dass ein Energiespeicher vorgesehen wird, so dass der Betrieb auch bei Stromausfall nicht unterbrochen werden muss. Außerdem können alle für den elektrischen Betrieb notwendigen Betriebsmittel redundant ausgeführt sein (z.B. die Frequenzumrichter, die Batterien oder auch der Elektromotor selbst).

## Patentansprüche

1. Wasserkraftanlage (1) umfassend eine hydraulische Maschine (2), ein Oberwasserbecken (3) und eine Druckrohrleitung (4), welche das Oberwasserbecken (3) mit der hydraulischen Maschine (2) verbindet, wobei die hydraulische Maschine (2) wenigstens ein Regelorgan (5) zum Regulieren der hydraulischen Maschine (2) und wenigsten einen Servomotor (6) zum Betätigen des Regelorganes (5) umfasst, wobei der Servomotor (6) mit dem Regelorgan (5) verbunden ist, **dadurch gekennzeichnet, dass** der Servomotor (6) eine Gewindespindel (7), welche mit dem Regelorgan (5) verbunden ist, ein Getriebe (8), welches mit der Gewindespindel (7) verbunden ist, und eine Antriebsmaschine (10) mit einer Antriebswelle umfasst, wobei die Antriebswelle mit dem Getriebe (8) so verbunden ist, dass die Antriebsmaschine (10) die Gewindespindel (7) über das Getriebe (8) antreiben kann, und wobei die Wasserkraftanlage (1) eine Wasserleitung (11) umfasst, welche die Antriebsmaschine (10) mit der Druckrohrleitung (4) verbindet, so dass die Antriebsmaschine (10) durch das mittels der Wasserleitung (11) aus der Druckrohrleitung (4) entnommene Wasser angetrieben werden kann, und wobei die Wasserkraftanlage (1) ein Ventil (12) umfasst, welches in der Wasserleitung (11) angeordnet ist, um den Wasserfluss durch die Wasserleitung (11) zu regeln.

2. Wasserkraftanlage (1) nach Anspruch 1, wobei der Servomotor (6) eine mechanische Bremse (9) umfasst, welche auf der Antriebswelle angeordnet ist, um deren Drehzahl zu begrenzen.

3. Wasserkraftanlage (1) nach einem der Ansprüche 1 oder 2, wobei die Wasserkraftanlage (1) eine weitere Wasserleitung (21), welche die Antriebsmaschine (10) mit der Druckrohrleitung (4) verbindet, und ein weiteres Ventil (22) umfasst, welches in der weiteren Wasserleitung (21) angeordnet ist, um den Wasserfluss durch die weitere Wasserleitung (21) zu regeln.

4. Wasserkraftanlage (1) nach einem der Ansprüche 1 oder 2, wobei der Servomotor (6) einen Elektromotor (13) mit einer Antriebswelle umfasst, wobei die Antriebswelle des Elektromotors (13) so mit dem Getriebe (8) verbunden ist, dass der Elektromotor (13) die Gewindespindel (7) über das Getriebe (8) antreiben kann.

5. Wasserkraftanlage (1) nach Anspruch 4, wobei das Getriebe (8) als Summier-Getriebe ausgeführt ist.

6. Wasserkraftanlage (1) nach Anspruch 4, wobei die Antriebswelle des Elektromotors (13) mit der Antriebswelle der Antriebsmaschine (10) so verbunden ist, dass diese eine einzige gemeinsame Antriebswelle bilden.

7. Wasserkraftanlage (1) nach Anspruch 4, wobei die Antriebsmaschine (10) so ausgeführt ist, dass sie vom Antriebstrang abgekuppelt werden kann.

8. Wasserkraftanlage (1) nach einem der vorangehenden Ansprüche, wobei der Servomotor (6) eine mechanische Bremse (14) umfasst, welche eine Kupplung umfasst, und wobei die mechanische Bremse (14) so angeordnet ist, dass dieselbe mittels der Kupplung mit einer Antriebswelle verbunden werden kann.

9. Wasserkraftanlage (1) nach einem der vorangehenden Ansprüche, wobei die Antriebsmaschine (10) eine hydraulische Strömungsmaschine umfasst.

10. Wasserkraftanlage (1) nach einem der Ansprüche 1 bis 8, wobei die Antriebsmaschine (10) als hydraulische Verdrängungsmaschine ausgebildet ist.

11. Wasserkraftanlage (1) nach Anspruch 9, wobei die Antriebsmaschine (10) eine ungeregelte Francis-Turbine umfasst.

## Claims

1. A hydroelectric power plant (1) comprising a hydraulic machine (2), a headwater basin (3) and a penstock (4) connecting the headwater basin (3) to the hydraulic machine (2), wherein the hydraulic machine (2) comprises at least one control member (5) for regulating the hydraulic machine (2) and at least one servomotor (6) for actuating the control member (5), the servomotor (6) being connected to the regulating member (5), **characterized in that** the servomotor (6) comprises a threaded spindle (7) connected to the regulating member (5), a transmission (8) connected to the threaded spindle (7) and a driving machine (10) with a drive shaft, wherein the drive shaft is connected to the transmission (8) in such a way that the driving machine (10) can drive the threaded spindle (7) via the transmission (8), and wherein the hydroelectric power plant (1) comprises a water pipe (11) which connects the driving machine (10) to the pressure pipe (4), so that the driving machine (10) can be driven by the water taken from the pressure pipe (4) by means of the water pipe (11), and wherein the hydroelectric power plant (1) comprises a valve (12) arranged in the water pipeline (11) for regulating the flow of water through the water pipe (11).

2. A hydroelectric power plant (1) according to claim 1, wherein the servomotor (6) comprises a mechanical brake (9) arranged on the drive shaft to limit the speed thereof.

3. A hydroelectric power plant (1) according to any one of claims 1 or 2, wherein the hydroelectric power plant (1) comprises a further water conduit (21) connecting the driving machine (10) to the penstock (4), and a further valve (22) arranged in the further water conduit (21) to control the flow of water through the further water conduit (21).

4. A hydroelectric power system (1) according to any one of claims 1 or 2, wherein the servomotor (6) comprises an electric motor (13) having a drive shaft, wherein the drive shaft of the electric motor (13) is connected to the transmission (8) such that the electric motor (13) can drive the threaded spindle (7) via the transmission (8).

5. A hydroelectric power plant (1) according to claim 4, wherein the transmission (8) is designed as a summing transmission.

6. A hydroelectric power plant (1) according to claim 4, wherein the drive shaft of the electric motor (13) is connected to the drive shaft of the driving machine (10) so that they form a single common drive shaft.

7. A hydroelectric power plant (1) according to claim 4, wherein the driving machine (10) is designed to be uncoupled from the drive train.

8. A hydroelectric power plant (1) according to any one of the preceding claims, wherein the servomotor (6) comprises a mechanical brake (14) comprising a clutch, and wherein the mechanical brake (14) is arranged to be connected to a drive shaft by means of the clutch.

9. A hydroelectric power plant (1) according to any one of the preceding claims, wherein the driving machine (10) comprises a hydraulic fluid machine.

10. A hydroelectric power plant (1) according to any one of claims 1 to 8, wherein the driving machine (10) is designed as a hydraulic displacement machine.

11. A hydroelectric power plant (1) according to claim 9, wherein the driving machine (10) comprises an uncontrolled Francis turbine.

## Revendications

1. Centrale hydroélectrique (1) comprenant une machine hydraulique (2), un bassin amont (3) et une conduite sous pression (4) qui relie le bassin amont (3) à la machine hydraulique (2), la machine hydraulique (2) comprenant au moins un organe de régulation (5) pour réguler la machine hydraulique (2) et au moins un servomoteur (6) pour actionner l'organe de régulation (5), le servomoteur (6) étant relié à l'organe de régulation (5), **caractérisé en ce que** le servomoteur (6) comprend une broche filetée (7) qui est reliée à l'organe de régulation (5), un engrenage (8) qui est relié à la broche filetée (7), et une machine d'entraînement (10) avec un arbre d'entraînement, l'arbre d'entraînement étant relié à la transmission (8) de telle sorte que la machine d'entraînement (10) peut entraîner la broche filetée (7) par l'intermédiaire de la transmission (8), et l'installation hydroélectrique (1) comprenant une conduite d'eau (11) qui relie la machine d'entraînement (10) à la conduite forcée (4), de sorte que la machine d'entraînement (10) peut être entraînée par l'eau prélevée dans la conduite sous pression (4) au moyen de la conduite d'eau (11), et dans lequel l'installation hydroélectrique (1) comprend une vanne (12) qui est disposée dans la conduite d'eau (11) pour réguler le flux d'eau à travers la conduite d'eau (11).

2. Centrale hydroélectrique (1) selon la revendication 1, dans laquelle le servomoteur (6) comprend un frein mécanique (9) qui est disposé sur l'arbre d'entra nement pour limiter sa vitesse de rotation.

3. Centrale hydroélectrique (1) selon l'une des revendications 1 ou 2, dans laquelle la centrale hydroélectrique (1) comprend une autre conduite d'eau (21) reliant la machine d'entraînement (10) à la conduite de refoulement (4), et une autre vanne (22) disposée dans l'autre conduite d'eau (21) pour réguler le débit d'eau à travers l'autre conduite d'eau (21).

4. Centrale hydroélectrique (1) selon l'une des revendications 1 ou 2, dans laquelle le servomoteur (6) comprend un moteur électrique (13) avec un arbre d'entraînement, l'arbre d'entraînement du moteur électrique (13) étant relié à la transmission (8) de telle sorte que le moteur électrique (13) peut entraîner la tige filetée (7) par l'intermédiaire de la transmission (8).

5. Centrale hydroélectrique (1) selon la revendication 4, dans laquelle le réducteur (8) est réalisé sous forme de réducteur totalisateur.

6. Centrale hydroélectrique (1) selon la revendication 4, dans laquelle l'arbre d'entraînement du moteur électrique (13) est relié à l'arbre d'entraînement de la machine motrice (10) de telle sorte qu'ils forment un seul arbre d'entraînement commun.

7. Centrale hydroélectrique (1) selon la revendication 4, dans laquelle la machine motrice (10) est conçue de manière à pouvoir être désaccouplée de la ligne d'entraînement.

8. Centrale hydroélectrique (1) selon l'une quelconque des revendications précédentes, dans laquelle le servomoteur (6) comprend un frein mécanique (14) qui comprend un embrayage, et dans laquelle le frein mécanique (14) est agencé de manière à pouvoir être relié à un arbre d'entraînement au moyen de l'embrayage.

9. Centrale hydroélectrique (1) selon l'une quelconque des revendications précédentes, dans laquelle la machine d'entraînement (10) comprend une turbomachine hydraulique.

10. Centrale hydroélectrique (1) selon l'une des revendications 1 à 8, dans laquelle la machine d'entraînement (10) est conçue comme une machine hydraulique à déplacement positif.

11. Centrale hydroélectrique (1) selon la revendication 9, dans laquelle la machine motrice (10) comprend une turbine Francis non régulée.
